# EUROPÄISCHE PATENTSCHRIFT

(11) **EP 3 060 759 B1**
(45) Veröffentlichungstag und Bekanntmachung des Hinweises auf die Patenterteilung: **07.03.2018**
(21) Anmeldenummer: 14806589.9
(22) Anmeldetag: 28.11.2014
(51) Int. Cl.: F01D 9/04, F01D 25/12, F01D 5/18, F01D 5/28

(54) **WÄRMEDÄMMBESCHICHTUNG EINER TURBINENSCHAUFEL**
THERMAL BARRIER COATING OF A TURBINE BLADE
REVÊTEMENT D'ISOLATION THERMIQUE D'UNE AUBE DE TURBINE

(30) Priorität: 13.12.2013 EP 13197179
(43) Veröffentlichungstag der Anmeldung: 31.08.2016
(73) Patentinhaber: Siemens Aktiengesellschaft, 80333 München (DE)
(72) Erfinder: BURBAUM, Bernd, 14612 Falkensee (DE); NEDDEMEYER, Torsten, 14612 Falkensee (DE)
(86) Internationale Anmeldenummer: PCT/EP2014/075965
(87) Internationale Veröffentlichungsnummer: WO 2015/086344

(56) Entgegenhaltungen:
- EP-A1- 2 431 495
- WO-A1-2006/069941
- WO-A2-2008/100306
- US-A1- 2003 209 589
- US-B1- 6 617 003

## Beschreibung

### Gegenstand der Erfindung

Die vorliegende Erfindung betrifft eine Turbinenschaufel, ein Verfahren zur Beschichtung einer Turbinenschaufel, ein Verfahren zur Kühlung einer Turbinenschaufel und eine Turbine. Dabei steht die Wärmedämmbeschichtung, deren Herstellung und deren Anwendung im Vordergrund.

### Hintergrund der Erfindung

Turbinenschaufeln, die während des Betriebs einer Turbine hohen Temperaturen ausgesetzt sind, werden typischerweise mit einer Wärmedämmbeschichtung (TBC - thermal barrier coating) beschichtet. Die hohen Temperaturen ausgesetzten Turbinenschaufeln, beispielsweise Gasturbinenschaufeln oder Dampfturbinenschaufeln, werden typischerweise aus Nickelbasis-Superlegierungen gefertigt.

Während des Betriebs der Turbine kann es durch Einschlag von Fremdkörpern zu einem Abplatzen der Wärmedämmbeschichtung (TBC) von der Nickelbasis-Superlegierung kommen. Wird die Wärmedämmbeschichtung (TBC) an der Turbinenschaufel beschädigt oder entfernt, führt dies sehr schnell zu einem Versagen der Turbinenschaufel.

Die US 6,617003 B1 beschreibt ein gekühltes Wärmedämmbeschichtungssystem, in dem mittels Mikrokanälen eine aktive Kühlung des Wärmedämmbeschichtungssystems erfolgt.

Die WO 2008/100306 A2 beschreibt eine Turbinenschaufel aus einem keramischen Faserverbundwerkstoff (CMC, Ceramic Matrix Composite), auf der eine keramische Wärmedämmschicht aufgebracht ist. Sowohl im Faserverbundwerkstoff, aus dem die Turbinenschaufel aufgebaut ist, als auch in der keramischen Wärmedämmschicht können Kühlluftkanäle ausgebildet sein.

Die WO 2006/069941 beschreibt ein Verfahren zum Herstellen einer Turbinenschaufel, in dem ein Grundkörper mit Kanälen hergestellt wird und die Kanäle anschließend durch Auftragen eines Beschichtungsmaterials auf den Grundkörper abgedeckt werden.

Die US 2003/0209589 A1 beschreibt ein Verfahren zu Herstellen von Kühlkanälen in einer auf einem metallischen Substrat aufgebrachten keramischen Beschichtung. Für das Herstellen der Kanäle wird zuerst ein Material auf die Oberfläche des metallischen Substrats aufgebracht, welches nach dem Aufbringen des Beschichtungsmaterials wieder entfernt wird.

Es ist eine Aufgabe der vorliegenden Erfindung, eine vorteilhafte Turbinenschaufel, ein Verfahren zu ihrer Beschichtung, eine vorteilhafte Turbine und ein Verfahren zum Kühlen einer Turbinenschaufel zur Verfügung zu stellen.

### Beschreibung der Erfindung

Die zuvor genannten Aufgaben werden durch eine Turbinenschaufel gemäß Patentanspruch 1, eine Turbine gemäß Patentanspruch 9, ein Verfahren zur Beschichtung einer Turbinenschaufel gemäß Patentanspruch 10 und ein Verfahren zum Kühlen einer Turbinenschaufel gemäß Patentanspruch 14 gelöst. Die abhängigen Ansprüche enthalten weitere, vorteilhafte Ausgestaltungen der Erfindung.

Die erfindungsgemäße Turbinenschaufel umfasst eine Wärmedämmbeschichtung. Die Wärmedämmbeschichtung umfasst eine innere Schicht und eine äußere Schicht. Die äußere Schicht ist unmittelbar oder mittelbar auf der inneren Schicht angeordnet. Die innere Schicht umfasst Strömungskanäle, die miteinander strömungstechnisch verbunden sind. Die Strömungskanäle sind mit einem Kühlfluidzuführungskanal verbunden. Die äußere Schicht umfasst ebenfalls miteinander strömungstechnisch verbundene Strömungskanäle, die mit einem Kühlfluidzuführungskanal verbunden sind.

Die äußere Schicht kann dabei unmittelbar auf der inneren Schicht angeordnet sein. Alternativ dazu kann zwischen der inneren Schicht und der äußeren Schicht eine Trennschicht angeordnet sein. Die Trennschicht hat den Vorteil, dass ein unabhängiges Betreiben des Kühlsystems der inneren Schicht und des Kühlsystems der äußeren Schicht bzw. ein separates Kühlen der inneren Schicht und der äußeren Schicht gewährleistet und ermöglicht wird.

Weiterhin kann die Turbinenschaufel einen Schaufelgrundkörper mit einer äußeren Oberfläche umfassen, wobei die innere Schicht in Richtung der Oberflächennormalen der äußeren Oberfläche im Bereich der Beschichtung einen geringeren Abstand zur äußeren Oberfläche des Schaufelgrundkörpers aufweist als die äußere Schicht.

Die erfindungsgemäße Turbinenschaufel hat den Vorteil, dass sie ein zweischichtiges Kühlsystem aufweist. Die innere Schicht und die äußere Schicht können unabhängig voneinander und separat mit Kühlfluid versorgt werden. Wird die äußere Schicht durch einen Einschlag beschädigt, wird das Kühlsystem der Schaufel durch das innere, zweite System in der inneren Schicht aufrechterhalten. Auf diese Weise wird eine Leistungssteigerung der Schaufel und damit auch der die Schaufel umfassenden Turbine erzielt, da insgesamt effektiver gekühlt wird und eine mechanische Belastung durch beispielsweise Einschläge von Fremdkörpern erst nach einer längeren Zeit zum Ausfall der Turbinenschaufel führen.

Vorteilhafterweise umfasst die Wärmedämmbeschichtung Keramik. Dabei kann/können die innere Schicht und/oder die äußere Schicht Keramik umfassen oder aus Keramik bestehen. Keramik ist aufgrund seiner günstigen wärmeisolierenden Eigenschaften vorteilhaft.

Grundsätzlich können die Strömungskanäle der inneren Schicht mit den Strömungskanälen der äußeren Schicht strömungstechnisch verbunden sein. Dazu ist bevorzugt mindestens ein Strömungskanal der inneren Schicht mit mindestens einem Strömungskanal der äußeren Schicht strömungstechnisch verbunden. Eine strömungstechnische Verbindung der Strömungskanäle der inneren Schicht und der äußeren Schicht ermöglicht ein effektives Abströmen des Kühlfluides, beispielsweise der zum Kühlen verwendeten Luft, und ermöglicht dadurch eine effektive Kühlung der Turbinenschaufel.

Die Turbinenschaufel kann grundsätzlich eine Nickelbasis-Superlegierung umfassen. Dabei kann der Turbinenschaufelrohling bzw. der Grundkörper der Turbinenschaufel aus einer Nickelbasis-Superlegierung bestehen. Vorzugsweise umfasst die Turbinenschaufel einen Grundkörper mit einer äußeren Oberfläche. Zwischen der äußeren Oberfläche des Grundkörpers und der inneren Schicht der Wärmedämmbeschichtung ist vorteilhafterweise eine Anbindungsschicht angeordnet. Die Anbindungsschicht ermöglicht eine geeignete Anbindung der Wärmedämmbeschichtung an den Grundwerkstoff, beispielsweise die Nickelbasis-Superlegierung. Bevorzugt weist die Anbindungsschicht eine Dicke zwischen 20 µm und 50 µm auf.

Bevorzugt umfasst die Turbinenschaufel ein Schaufelblatt, wobei die Wärmedämmbeschichtung auf dem Schaufelblatt angeordnet ist. Dies hat den Vorteil, dass das Schaufelblatt als der in der Regel thermisch am stärksten belastete Bereich der Turbinenschaufel besonders effektiv gekühlt werden kann.

Die erfindungsgemäße Turbine umfasst eine Anzahl der zuvor beschriebenen Turbinenschaufeln, also mindestens eine der zuvor beschriebenen Turbinenschaufeln. Dabei kann es sich bei der Turbine beispielsweise um eine Gasturbine oder eine Dampfturbine handeln. Die erfindungsgemäße Turbine hat grundsätzlich dieselben Eigenschaften und Vorteile wie die zuvor beschriebene erfindungsgemäße Turbinenschaufel.

Im Rahmen des erfindungsgemäßen Verfahrens zur Beschichtung einer Turbinenschaufel wird auf zumindest einen Teilbereich der Oberfläche der zu beschichtenden Turbinenschaufel eine Wärmedämmbeschichtung aufgebracht. Dazu wird mittels Selektivem Laserschmelzen (Selective Laser Melting - SLM) eine innere Schicht aufgebaut bzw. aufgebracht. Die innere Schicht umfasst eine Anzahl miteinander strömungstechnisch verbundener Strömungskanäle. Weiterhin wird mittels Selektivem Laserschmelzen (SLM) eine äußere Schicht mittelbar oder unmittelbar auf die innere Schicht aufgebracht. Die äußere Schicht umfasst eine Anzahl miteinander strömungstechnisch verbundene Strömungskanäle.

Bevorzugt wird mittels Selektivem Laserschmelzen (SLM) eine Zwischenschicht auf die innere Schicht aufgebaut bzw. aufgebracht und anschließend die äußere Schicht auf die Zwischenschicht aufgebracht.

Das beschriebene Verfahren eignet sich zur Anwendung im Rahmen der Neuherstellung von Turbinenschaufeln und im Rahmen der Wiederaufarbeitung bzw. Wiederaufbereitung von Turbinenschaufeln. Es ist insbesondere geeignet zur Herstellung einer oben beschriebenen erfindungsgemäßen Turbinenschaufel. Bei der Turbinenschaufel kann es sich beispielsweise um eine Gasturbinenschaufel oder eine Dampfturbinenschaufel handeln. Es kann also im Rahmen des beschriebenen Beschichtungsverfahrens eine Gasturbinenschaufel oder eine Dampfturbinenschaufel beschichtet werden.

Das beschriebene Verfahren hat den Vorteil, dass durch den Fertigungsprozess der Beschichtung ein zweischichtiges Kühlsystem mittels Selektivem Laserschmelzen generiert wird. Wird die äußere Schicht, beispielsweise durch einen Einschlag, beschädigt, so wird das Kühlsystem der Turbinenschaufel durch das innere, zweite System aufrechterhalten. Auf diese Weise wird eine Leistungssteigerung der Turbinenschaufel bzw. der Turbine, beispielsweise Gasturbine, erreicht, da die erfindungsgemäß beschichtete Turbinenschaufel effektiver gekühlt werden kann als bisher bekannte Turbinenschaufeln. Insbesondere wird weniger Kühlfluid, zum Beispiel Luft, zur Kühlung benötigt.

Darüber hinaus hat das erfindungsgemäße Verfahren den Vorteil, dass das typischerweise erforderliche Laserbohren im Rahmen der Herstellung und Beschichtung bzw. der Wiederaufarbeitung von Turbinenschaufeln entfällt.

Vorzugsweise umfasst die Turbinenschaufel ein Schaufelblatt und die Wärmedämmbeschichtung wird auf die Oberfläche des Schaufelblattes aufgebracht.

Vorteilhafterweise umfasst die Wärmedämmbeschichtung Keramik. Es kann/können also beispielsweise die innere Schicht und/oder die Zwischenschicht und/oder die äußere Schicht Keramik umfassen. Bei dem verwendeten Keramikmaterial handelt es sich vorzugsweise um Yttrium-stabilisiertes Zirkoniumoxid verstanden (YSZ) oder mit Yttrium oder Yttriumoxid zumindest teilweise stabilisiertes Zirkoniumoxid.

Prinzipiell können zwischen den aneinander angrenzenden Schichten mittels Selektivem Laserschmelzen Auslassöffnungen gefertigt werden. Es können also beispielsweise die innere Schicht und die äußere Schicht bzw. die innere Schicht und die Zwischenschicht oder die Zwischenschicht und die äußere Schicht strömungstechnisch über entsprechende Auslassöffnungen miteinander verbunden werden. Weiterhin kann mindestens ein Kühlfluidzuführungskanal mittels Selektivem Laserschmelzen gefertigt werden. Vorzugsweise werden für die innere Schicht und für die äußere Schicht separate Kühlfluidzuführungskanäle gefertigt. Dies ermöglicht eine voneinander unabhängige Kühlfluidzufuhr zu der inneren Schicht und zu der äußeren Schicht. Auf diese Weise ist es möglich, den Temperaturgradienten in der Wärmedämmschicht und in dem Grundwerkstoff gezielt zu beeinflussen und Spannungsspitzen in der Wärmedämmbeschichtung (TBC) zu vermeiden.

Vorteilhafterweise kann auf den Grundwerkstoff der Turbinenschaufel zunächst eine Anbindungsschicht aufgetragen werden bevor mittels Selektivem Laserschmelzen die innere Schicht aufgebracht wird. Das Aufbringen der Anbindungsschicht kann zum Beispiel mithilfe des Verfahrens des thermischen Spritzens erfolgen. Vorzugsweise wird eine Anbindungsschicht mit einer Schichtdicke zwischen 20 µm und 50 µm auf die zu beschichtende Turbinenschaufel aufgetragen. Mithilfe der Anbindungsschicht wird eine geeignete Anbindung der weiteren Wärmedämmbeschichtung an den Grundwerkstoff der Turbinenschaufel erreicht. Bei dem Grundwerkstoff der Turbinenschaufel handelt es sich beispielsweise um eine Nickelbasis-Superlegierung.

Das erfindungsgemäße Verfahren zur Kühlung einer Turbinenschaufel bezieht sich auf eine zuvor beschriebene erfindungsgemäße Turbinenschaufel. Im Rahmen des Verfahrens wird Kühlfluid in die Strömungskanäle der inneren Schicht eingebracht. Darüber hinaus wird Kühlfluid in die Strömungskanäle der äußeren Schicht eingebracht. Bei dem Kühlfluid handelt es sich beispielsweise um Luft. Das Kühlverfahren ermöglicht eine flexible und im Hinblick auf mechanische Belastungen der Turbinenschaufel, beispielsweise durch Einschläge, robuste Kühlung der Schaufel. Wird beispielsweise die äußere Schicht beschädigt, so ermöglicht die innere Schicht weiterhin eine Kühlung der Turbinenschaufel. Auf diese Weise wird gleichzeitig die Laufzeit bzw. die Lebensdauer der Turbinenschaufeln verlängert.

Zum Beispiel kann Kühlfluid in die Strömungskanäle der inneren Schicht durch einen nur mit der inneren Schicht strömungstechnisch verbundenen Kühlfluidzuführungskanal eingebracht werden. Zusätzlich oder alternativ dazu kann Kühlfluid in die Strömungskanäle der äußeren Schicht durch einen nur mit der äußeren Schicht strömungstechnisch verbundenen Kühlfluidzuführungskanal eingebracht werden. Dadurch wird die Turbinenschaufel separat und unabhängig voneinander sowohl über die innere Schicht als auch über die äußere Schicht gekühlt.

Darüber hinaus kann in die Strömungskanäle der inneren Schicht Kühlfluid eingebracht werden, welches sich von einem in die Strömungskanäle der äußeren Schicht eingebrachten Kühlfluid in seiner Temperatur und/oder seiner Zusammensetzung unterscheidet. Dies ermöglicht ebenfalls eine effektive und flexible Kühlung der Turbinenschaufel.

Insgesamt wird durch die vorliegende Erfindung ein zweischichtiges Kühlsystem, welches zum Beispiel mit Selektivem Laserschmelzen generiert wird, zur Verfügung gestellt. Dadurch kann eine zweistufige Kühlung realisiert werden, indem beispielsweise voneinander unabhängige Luftströme eingestellt werden. Damit ist es möglich den Temperaturgradienten in der Wärmedämmschicht und in dem Grundwerkstoff gezielt zu beeinflussen und Spannungsspitzen in der Wärmedämmschicht zu vermeiden. Auf diese Weise wird die Leistung der Turbine bzw. der jeweiligen Turbinenschaufel durch die Möglichkeit einer effektiveren Kühlung erhöht. Ein weiterer Vorteil der Fertigung der Wärmedämmbeschichtung durch Selektives Laserschmelzen besteht darin, dass das Bohren der Kühllöcher entfällt.

Grundsätzlich kann auf den Grundwerkstoff der Turbinenschaufel zunächst eine MCrAlX-Beschichtung aufgebracht werden, bevor die vorliegend beschriebene Wärmedämmbeschichtung aufgebracht wird. Dabei bezeichnet das M in MCrAlX zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf).

Eine erfindungsgemäße Turbinenschaufel kann also zusätzlich eine MCrAlX-Beschichtung umfassen. Diese ist dann vorzugsweise zwischen der Oberfläche des Grundkörpers, beispielsweise der Nickelbasis-Superlegierung, und der inneren Schicht bzw. der Anbindungsschicht der zuvor beschriebenen Wärmedämmbeschichtung angeordnet.

### Beschreibung eines Ausführungsbeispiels

Weitere Eigenschaften, Merkmale und Vorteile der folgenden Erfindung werden im Folgenden anhand eines Ausführungsbeispiels näher beschrieben. Die in diesem Zusammenhang beschriebenen Merkmale sind sowohl einzeln als auch in einer beliebigen Kombination miteinander vorteilhaft. Das beschriebene Ausführungsbeispiel schränkt den Gegenstand der Erfindung nicht ein.
- Figur 1: zeigt schematisch eine Turbinenschaufel in perspektivischer Ansicht und einen Schnitt durch einen Teilbereich der Beschichtung.
- Figur 2: zeigt schematisch eine Gasturbine.
- Figur 3: zeigt schematisch eine Turbinenschaufel.

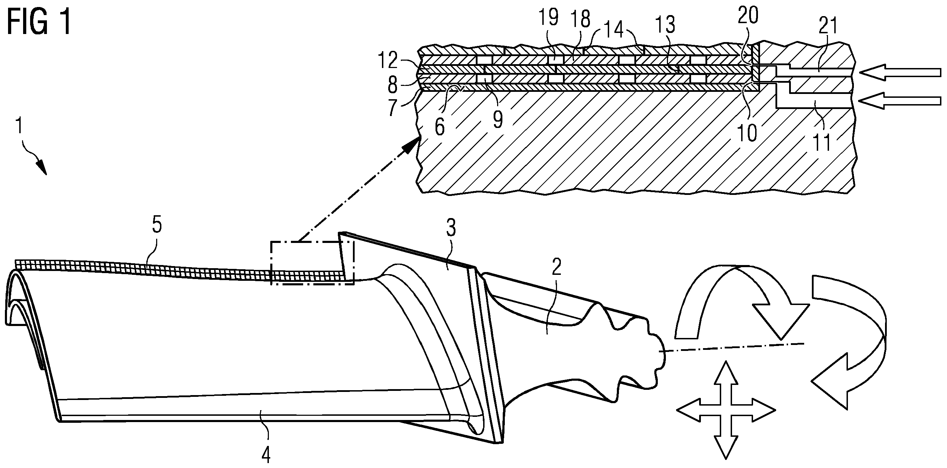

Die Figur 1 zeigt schematisch eine Turbinenschaufel in perspektivischer Ansicht und einen Schnitt durch einen Teilbereich der Beschichtung. Die der Turbinenschaufel 1 kann es sich zum Beispiel um eine Leitschaufel oder eine Laufschaufel einer Gasturbine oder einer Dampfturbine handeln.

Die in der Figur 1 gezeigte Turbinenschaufel 1 umfasst einen Schaufelfuß 2, eine Plattform 3 und ein Schaufelblatt 4. Die Plattform 3 ist zwischen dem Schaufelfuß 2 und dem Schaufelblatt 4 angeordnet. Das Schaufelblatt 4 ist mit einer keramischen Wärmedämmbeschichtung 5 beschichtet. Ein Schnitt durch einen Teilbereich der Beschichtung 5 ist ebenfalls in der Figur 1 gezeigt.

Bei dem Grundwerkstoff der Turbinenschaufel handelt es sich vorzugsweise um eine Nickelbasis-Superlegierung. Auf die Oberfläche 6 der Turbinenschaufel 1 wird vorzugsweise zunächst eine Anbindungsschicht 7 thermisch aufgespritzt. Die aufgebrachte Anbindungsschicht 7 hat bevorzugt eine Schichtdicke zwischen 20 µm und 50 µm, um eine geeignete Anbindung an den Grundwerkstoff zu erzielen.

Weiterhin wird mittels Selektivem Laserschmelzen eine innere Schicht 8 aufgebaut. Die innere Schicht 8 umfasst eine Anzahl miteinander strömungstechnisch verbundene Strömungskanäle 9. Die Strömungskanäle 9 sind darüber hinaus strömungstechnisch mit einer Kühlfluidzuführungsöffnung 10 verbunden. Die Zuführungsöffnung 10 verbindet die Strömungskanäle 9 der inneren Schicht 8 mit einem Kühlfluidzuführungskanal 11. Durch den Kühlfluidzuführungskanal 11 kann beispielsweise Kühlluft in die innere Schicht 8 bzw. in die Strömungskanäle 9 der inneren Schicht 8 eingebracht werden.

Auf die innere Schicht 8 wird entweder unmittelbar eine äußere Schicht 18 mithilfe von Selektivem Laserschmelzen aufgebaut bzw. aufgebracht oder es wird vorzugsweise zunächst eine Zwischenschicht 12 mithilfe von Selektivem Laserschmelzen auf die innere Schicht 8 aufgebaut. Die Zwischenschicht 12 umfasst vorzugsweise eine Anzahl Auslassöffnungen 13, die die Strömungskanäle 9 der inneren Schicht 8 mit den Strömungskanälen 19 der äußeren Schicht 18 strömungstechnisch verbindet. Auf die Zwischenschicht 12 wird anschließend mithilfe von Selektivem Laserschmelzen die äußere Schicht 18 aufgebaut bzw. aufgebracht. Die äußere Schicht 18 umfasst eine Anzahl Strömungskanäle 19, die strömungstechnisch miteinander verbunden sind. Die äußere Schicht 18 umfasst weiterhin mindestens eine Kühlfluidzuführungsöffnung 20. Die Kühlfluidzuführungsöffnung 20 ist mit einem Zuführungskanal 21 strömungstechnisch verbunden. Durch den Zuführungskanal 21 kann beispielsweise Kühlluft in die Strömungskanäle 19 der äußeren Schicht 18 eingebracht werden. Die äußere Schicht 18 kann zudem Auslassöffnungen 14 umfassen, die die Strömungskanäle 19 der äußeren Schicht 18 mit der äußeren Oberfläche der beschichteten Turbinenschaufel 1 verbindet.

Grundsätzlich können die innere Schicht 8, die Zwischenschicht 12 und die äußere Schicht 18 mittels Selektivem Laserschmelzen generativ aufgebaut werden. Durch das so erzielte zweistufige Kühlsystem können voneinander unabhängige Luftströme eingestellt werden. Damit ist es möglich, den Temperaturgradienten in der Wärmedämmschicht und in den Grundwerkstoff gezielt zu beeinflussen und Spannungsspitzen in der Wärmedämmbeschichtung zu vermeiden.

Die in der Figur 1 gezeigten Pfeile kennzeichnen die Bewegungsrichtung der Turbinenschaufel 1 im Rahmen des Selektiven Laserschmelzens. Alternativ zu einer entsprechenden Bewegung der Turbinenschaufel während des Selektiven Laserschmelzens kann prinzipiell auch die verwendete Laserschmelzvorrichtung entsprechend bewegt werden.

Im Rahmen des erfindungsgemäßen Verfahrens zum Kühlen einer Turbinenschaufel 1 können beispielsweise die verschiedenen Zuführungskanäle 11 und 21 mit Kühlfluid, beispielsweise Luft, unterschiedlicher Temperatur oder unterschiedlicher Zusammensetzung versorgt werden. Dies ermöglicht eine effektive und flexible Kühlung.

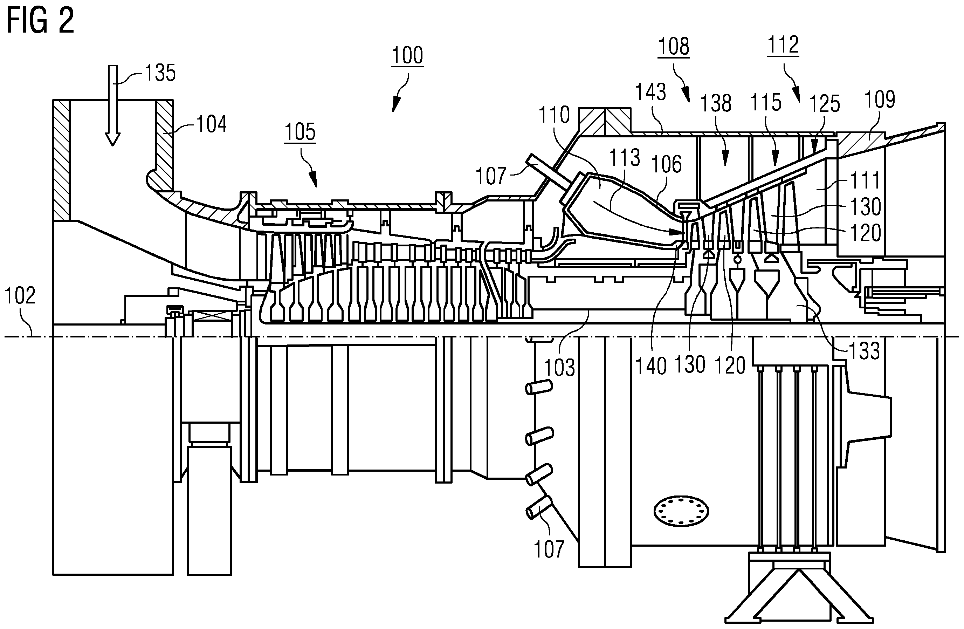

Die Figur 2 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

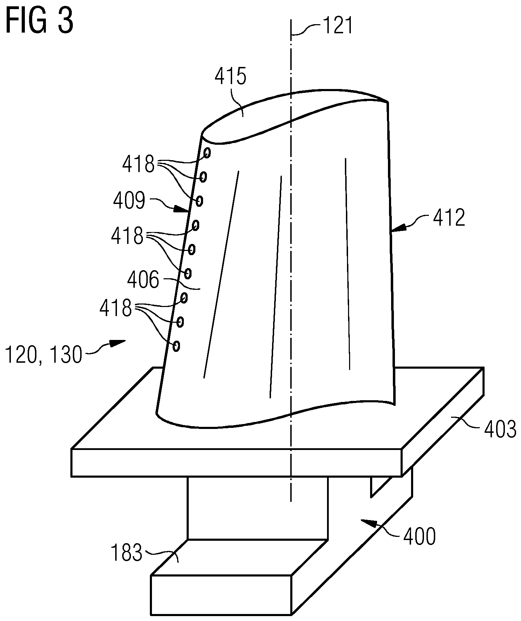

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 zusätzlich zu der beschriebenen erfindungsgemäßen Kühlung gekühlt werden soll, ist sie zum Beispiel hohl und weist ggf. noch Filmkühllöcher 418 (gestrichelt angedeutet) auf.

## Patentansprüche

1. Turbinenschaufel (1) mit einer Wärmedämmbeschichtung (5), wobei die Wärmedämmbeschichtung (5) eine innere Schicht (8) und eine äußere Schicht (18), die unmittelbar oder mittelbar auf der inneren Schicht (8) angeordnet ist, umfasst, wobei die innere Schicht (8) miteinander strömungstechnisch verbundene Strömungskanäle (9) umfasst, die mit einem Kühlfluidzuführungskanal (10) verbunden sind,
**dadurch gekennzeichnet, dass**
die äußere Schicht (18) miteinander strömungstechnisch verbundene Strömungskanäle (19) umfasst, die mit einem Kühlfluidzuführungskanal (20) verbunden sind.

2. Turbinenschaufel (1) nach Anspruch 1,
**dadurch gekennzeichnet, dass**
die Wärmedämmbeschichtung (5) Keramik umfasst.

3. Turbinenschaufel (1) nach Anspruch 1 oder Anspruch 2,
**dadurch gekennzeichnet, dass**
mindestens ein Strömungskanal (9) der inneren Schicht (8) mit mindestens einem Strömungskanal (19) der äußeren Schicht (18) strömungstechnisch verbunden ist.

4. Turbinenschaufel (1) nach einem der Ansprüche 1 bis 3,
**dadurch gekennzeichnet, dass**
die Turbinenschaufel (1) eine Nickbasis-Superlegierung umfasst.

5. Turbinenschaufel (1) nach einem der Ansprüche 1 bis 4,
**dadurch gekennzeichnet, dass**
die Turbinenschaufel (1) einen Grundkörper mit einer äußeren Oberfläche (6) umfasst und zwischen der äußeren Oberfläche (6) des Grundkörpers und der inneren Schicht (8) eine Anbindungsschicht (7) angeordnet ist.

6. Turbinenschaufel (1) nach Anspruch 5,
**dadurch gekennzeichnet, dass**
die Anbringungsschicht (7) eine Dicke zwischen 20pm und 50pm aufweist.

7. Turbinenschaufel (1) nach einem der Ansprüche 1 bis 6,
**dadurch gekennzeichnet, dass**
zwischen der inneren Schicht (8) und der äußeren Schicht (18) eine Trennschicht (12) angeordnet ist.

8. Turbinenschaufel (1) nach einem der Ansprüche 1 bis 7,
**dadurch gekennzeichnet, dass**
die Turbinenschaufel (1) ein Schaufelblatt (4) umfasst und die Wärmedämmbeschichtung (5) auf dem Schaufelblatt (4) angeordnet ist.

9. Turbine (100), die eine Anzahl Turbinenschaufeln (1) nach einem der Ansprüche 1 bis 8 umfasst.

10. Verfahren zur Beschichtung einer Turbinenschaufel (1), wobei auf zumindest einen Teilbereich der Oberfläche (6) der zu beschichtenden Turbinenschaufel (1) eine Wärmedämmbeschichtung (5) aufgebracht wird,
**dadurch gekennzeichnet, dass**
mittels Selektivem Laserschmelzen eine innere Schicht (8), die eine Anzahl miteinander strömungstechnisch verbundener Strömungskanäle (9) umfasst, aufgebracht wird, und
mittels Selektivem Laserschmelzen eine äußere Schicht (18), die eine Anzahl miteinander strömungstechnisch verbundener Strömungskanäle (19) umfasst, mittelbar oder unmittelbar auf die innere Schicht (8) aufgebracht wird.

11. Verfahren nach Anspruch 10,
**dadurch gekennzeichnet, dass**
mittels Selektivem Laserschmelzen eine Zwischenschicht (12) auf die innere Schicht (8) aufgebracht wird und anschließend die äußere Schicht (18) auf die Zwischenschicht (12) aufgebracht wird.

12. Verfahren nach einem der Ansprüche 10 oder 11,
**dadurch gekennzeichnet, dass**
Auslassöffnungen (13, 14) zwischen den aneinander angrenzenden Schichten (8, 12, 18) mittels Selektivem Laserschmelzen gefertigt werden und/oder mindestens ein Kühlfluidzuführungskanal (10, 20) mittels Selektivem Laserschmelzen gefertigt wird.

13. Verfahren nach einem der Ansprüche 10 bis 12,
**dadurch gekennzeichnet, dass**
eine Anbindungsschicht (12) auf den Grundwerkstoff der Turbinenschaufel (1) aufgetragen wird bevor mittels Selektivem Laserschmelzen die innere Schicht (8) aufgebracht wird.

14. Verfahren zur Kühlung einer Turbinenschaufel (1) nach einem der Ansprüche 1 bis 8,
**dadurch gekennzeichnet, dass**
Kühlfluid in die Strömungskanäle (9) der inneren Schicht (8) eingebracht wird und/oder Kühlfluid in die Strömungskanäle (19) der äußeren Schicht (18) eingebracht wird.

15. Verfahren nach Anspruch 14,
**dadurch gekennzeichnet, dass**
in die Strömungskanäle (9) der inneren Schicht (8) Kühlfluid eingebracht wird, welches sich von einem in die Strömungskanäle (19) der äußeren Schicht (18) eingebrachten Kühlfluid in seiner Temperatur und/oder seiner Zusammensetzung unterscheidet.

## Claims

1. Turbine blade or vane (1) having a thermal barrier coating (5),
wherein
the thermal barrier coating (5) comprises an inner layer (8) and an outer layer (18), which is arranged directly or indirectly on the inner layer (8), wherein the inner layer (8) comprises flow ducts (9) which are connected fluidically to one another and which are connected to a cooling fluid supply duct (10),
**characterized in that**
the outer layer (18) comprises flow ducts (19) which are connected fluidically to one another and which are connected to a cooling fluid supply duct (20).

2. Turbine blade or vane (1) according to Claim 1,
**characterized in that**
the thermal barrier coating (5) comprises ceramic.

3. Turbine blade or vane (1) according to Claim 1 or Claim 2,
**characterized in that**
at least one flow duct (9) of the inner layer (8) is connected fluidically to at least one flow duct (19) of the outer layer (18).

4. Turbine blade or vane (1) according to one of Claims 1 to 3,
**characterized in that**
the turbine blade or vane (1) comprises a nickel-based superalloy.

5. Turbine blade or vane (1) according to one of Claims 1 to 4,
**characterized in that**
the turbine blade or vane (1) comprises a main body with an outer surface (6) and a bonding layer (7) is arranged between the outer surface (6) of the main body and the inner layer (8).

6. Turbine blade or vane (1) according to Claim 5,
**characterized in that**
the bonding layer (7) has a thickness of between 20 µm and 50 µm.

7. Turbine blade or vane (1) according to one of Claims 1 to 6,
**characterized in that**
a separating layer (12) is arranged between the inner layer (8) and the outer layer (18).

8. Turbine blade or vane (1) according to one of Claims 1 to 7,
**characterized in that**
the turbine blade or vane (1) comprises a main blade or vane part (4) and the thermal barrier coating (5) is arranged on the main blade or vane part (4).

9. Turbine (100), which comprises a number of turbine blades or vanes (1) according to one of Claims 1 to 8.

10. Method for coating a turbine blade or vane (1),
wherein a thermal barrier coating (5) is applied to at least one partial region of the surface (6) of the turbine blade or vane (1) to be coated,
**characterized in that**
an inner layer (8), which comprises a number of flow ducts (9) connected fluidically to one another, is applied by means of selective laser melting, and
an outer layer (18), which comprises a number of flow ducts (19) connected fluidically to one another, is applied indirectly or directly to the inner layer (8) by means of selective laser melting.

11. Method according to Claim 10,
**characterized in that**
an intermediate layer (12) is applied to the inner layer (8) by means of selective laser melting and then the outer layer (18) is applied to the intermediate layer (12) .

12. Method according to either of Claims 10 and 11,
**characterized in that**
outlet openings (13, 14) are produced between the mutually adjoining layers (8, 12, 18) by means of selective laser melting and/or at least one cooling fluid supply duct (10, 20) is produced by means of selective laser melting.

13. Method according to one of Claims 10 to 12,
**characterized in that**
a bonding layer (12) is applied to the base material of the turbine blade or vane (1) before the inner layer (8) is applied by means of selective laser melting.

14. Method for cooling a turbine blade or vane (1) according to one of Claims 1 to 8,
**characterized in that**
cooling fluid is introduced into the flow ducts (9) of the inner layer (8) and/or cooling fluid is introduced into the flow ducts (19) of the outer layer (18).

15. Method according to Claim 14,
**characterized in that**
cooling fluid which differs from a cooling fluid introduced into the flow ducts (19) of the outer layer (18) in terms of its temperature and/or its composition is introduced into the flow ducts (9) of the inner layer (8) .

## Revendications

1. Aube (1) de turbine, ayant un revêtement (5) d'isolation thermique, le revêtement (5) d'isolation thermique comprenant une couche (8) intérieure et une couche (18) extérieure, qui est mise, directement ou indirectement, sur la couche (8) intérieure, la couche (8) intérieure comprenant des canaux (9) d'écoulement, qui communiquent entre eux en technique d'écoulement et qui communiquent avec un canal (10) d'apport de fluide de refroidissement,
**caractérisée en ce que**
la couche (18) extérieure comprend des canaux (19) d'écoulement, qui communiquent entre eux en technique d'écoulement et qui communiquent avec un canal (20) d'apport de fluide de refroidissement.

2. Aube (1) de turbine suivant la revendication 1,
**caractérisée en ce que**
le revêtement (5) d'isolation thermique comprend de la céramique.

3. Aube (1) de turbine suivant la revendication 1 ou revendication 2,
**caractérisée en ce que**
au moins un canal (9) d'écoulement de la couche (8) intérieure communique en technique d'écoulement avec au moins un canal (19) d'écoulement de la couche (18) extérieure.

4. Aube (1) de turbine suivant l'une des revendications 1 à 3,
**caractérisée en ce que**
l'aube (1) de turbine comprend un superalliage à base de nickel.

5. Aube (1) de turbine suivant l'une des revendications 1 à 4,
**caractérisée en ce que**
l'aube (1) de turbine comprend un corps de base, ayant une surface (6) extérieure, et une couche (7) de liaison est disposée entre la surface (6) extérieure du corps de base et la couche (8) intérieure.

6. Aube (1) de turbine suivant la revendication 5, **caractérisée en ce que**
la couche (7) de liaison a une épaisseur comprise entre 20 microns et 50 microns.

7. Aube (1) de turbine suivant l'une des revendications 1 à 6,
**caractérisée en ce qu'**
une couche (12) de séparation est disposée entre la couche (8) intérieure et la couche (18) extérieure.

8. Aube (1) de turbine suivant l'une des revendications 1 à 7,
**caractérisée en ce que**
l'aube (1) de turbine comprend une lame (4) d'aube et le revêtement (5) d'isolation thermique est mis sur la lame (4) d'aube.

9. Turbine (100), qui comprend un certain nombre d'aubes (1) de turbine suivant l'une des revendications 1 à 8.

10. Procédé pour revêtir une aube (1) de turbine, dans lequel on dépose, sur au moins une région partielle de la surface (6) de l'aube (1) de turbine à revêtir, un revêtement (5) d'isolation thermique,
**caractérisé en ce qu'**
au moyen d'une fusion laser sélective, on dépose une couche (8) intérieure, qui comprend un certain nombre de canaux (9) d'écoulement communiquant entre eux en technique d'écoulement et
au moyen d'une fusion laser sélective, on dépose, indirectement ou directement, sur la couche (8) intérieure une couche (18) extérieure, qui comprend un certain nombre de canaux (19) d'écoulement communiquant entre eux en technique d'écoulement.

11. Procédé suivant la revendication 10,
**caractérisé en ce qu'**
au moyen d'une fusion laser sélective, on dépose une couche (12) intermédiaire sur la couche (18) intérieure et, ensuite, on dépose la couche (18) extérieure sur la couche (12) intermédiaire.

12. Procédé suivant l'une des revendications 10 ou 11,
**caractérisé en ce que**
l'on ménage, au moyen d'une fusion laser sélective, des ouvertures (13, 14) de sortie entre les couches (8, 12, 18) voisines les unes des autres et/ou on ménage, au moyen d'une fusion laser sélective, au moins un canal (10, 20) d'apport de fluide de refroidissement.

13. Procédé suivant l'une des revendications 10 à 12,
**caractérisé en ce que**
l'on dépose une couche (12) de liaison sur le matériau de base de l'aube (1) de turbine, avant de déposer la couche (8) intérieure au moyen d'une fusion laser sélective.

14. Procédé de refroidissement d'une aube (1) de turbine suivant l'une des revendications 1 à 8,
**caractérisé en ce que**
l'on introduit du fluide de refroidissement dans les canaux (9) d'écoulement de la couche (8) intérieure et/ou du fluide de refroidissement dans les canaux (19) d'écoulement de la couche (18) extérieure.

15. Procédé suivant la revendication 14,
**caractérisé en ce que**
l'on introduit dans les canaux (9) d'écoulement de la couche (8) intérieure du fluide de refroidissement, qui se distingue, par sa température et/ou sa composition, d'un fluide de refroidissement introduit dans les canaux (19) d'écoulement de la couche (18) extérieure.
